# EUROPÄISCHE PATENTANMELDUNG

(11) **EP 4 329 266 A1**
(43) Veröffentlichungstag der Anmeldung: **28.02.2024**
(21) Anmeldenummer: 22192191.9
(22) Anmeldetag: 25.08.2022
(51) Int. Cl.: H04L 67/1097, H04W 4/02, G06F 3/06

(54) **VERFAHREN UND SYSTEMANORDNUNG ZUR GEOLOKATION VON DATENSÄTZEN**

(71) Anmelder: DGC Switzerland AG, 8002 Zürich (CH)
(72) Erfinder: Nehls, Matthias, 8002 Zürich (CH)
(74) Vertreter: Reich, Jochen

(57) **Zusammenfassung**

Die vorliegende Erfindung ist auf ein Verfahren zum Verteilen von Datensätzen in einem Computernetzwerk gerichtet, wobei die Datensätze analysiert werden und zukünftige Zugriffsparameter abgeleitet werden. Der Erfindung liegt der Gedanke zugrunde, dass eine Verringerung der geographischen Distanz von Datenquelle und Datensenke typischerweise generell zu niedrigeren Latenzzeiten, höherer Bandbreite und höherer Ausfallsicherung führt. Hierbei wird zudem berücksichtigt, dass weitere Netzwerkparameter beziehungsweise Zugriffsparameter die Datenübertragung beeinflussen. Die vorliegende Erfindung schlägt also vor, anhand von gelernten Zugriffsparametern zukünftige Zugriffsparameter vorauszusagen und proaktiv die Datensätze in dem Computernetzwerk geschickt umzuverteilen. Die vorliegende Erfindung ist ferner gerichtet auf eine entsprechend eingerichtete Systemanordnung sowie ein Computerprogrammprodukt beziehungsweise ein Medium mit Steuerbefehlen zur Durchführung des Verfahrens beziehungsweise zur Ansteuerung der Systemanordnung.

## Beschreibung

Die vorliegende Erfindung ist auf ein Verfahren zum Verteilen von Datensätzen in einem Computernetzwerk gerichtet, wobei die Datensätze analysiert werden und zukünftige Zugriffsparameter abgeleitet werden. Der Erfindung liegt der Gedanke zugrunde, dass eine Verringerung der geographischen Distanz von Datenquelle und Datensenke typischerweise generell zu niedrigeren Latenzzeiten, höherer Bandbreite und höherer Ausfallsicherung führt. Hierbei wird zudem berücksichtigt, dass weitere Netzwerkparameter beziehungsweise Zugriffsparameter die Datenübertragung beeinflussen. Die vorliegende Erfindung schlägt also vor, anhand von gelernten Zugriffsparametern zukünftige Zugriffsparameter vorauszusagen und proaktiv die Datensätze in dem Computernetzwerk geschickt umzuverteilen. Die vorliegende Erfindung ist ferner gerichtet auf eine entsprechend eingerichtete Systemanordnung sowie ein Computerprogrammprodukt beziehungsweise ein Medium mit Steuerbefehlen zur Durchführung des Verfahrens beziehungsweise zur Ansteuerung der Systemanordnung.

Aus dem Stand der Technik sind unterschiedliche Metriken bekannt, die Zugriffsparameter beschreiben und zudem sind Algorithmen bekannt, welche Datensätze in einem Computernetzwerk verteilen. Hierbei wird im Stand der Technik typischerweise ausgemessen, wie die Zugriffsparameter, also Bandbreite, Latenzzeiten und Ausfallsicherheit, vorliegen und sodann werden die Datensätze auf Netzwerkknoten derart verteilt, dass diese Zugriffsparameter optimiert werden.

Aus dem Stand der Technik ist es weiterhin bekannt, Datensätze anhand von regulären Ausdrücken zu beschreiben und somit das Datenformat zu spezifizieren. Darüber hinaus ist es bekannt, dass in einem Internetprotokoll Information ausgelesen werden kann, welche angibt, wo sich der Zugreifer geographisch befindet. So können beispielsweise Benutzer über ihre Internetprotokolladresse geographisch geortet werden.

Ferner ist es bekannt, dass mobile Endgeräte anhand unterschiedlicher Techniken derart geortet werden können, dass ein Bewegungsprofil des jeweiligen Benutzers entsteht. Hierbei sind eine satellitengestützte Ortung bekannt sowie Ortungsmechanismen, die Mobilfunkstationen einbeziehen. So können Latenzzeiten von einem mobilen Endgerät bezüglich eines Funkmastes ausgewertet werden und beispielsweise mittels einer Dreiecksortung kann ein Bewegungsprofil erstellt werden. Werden also die Latenzzeiten zu drei Mobilfunkmasten ausgewertet, so lässt sich klar beschreiben, an welcher geographischen Position sich das mobile Endgerät innerhalb des aufgespannten Dreiecks befindet.

Generell ist es bekannt, Daten in einem Speichernetzwerk derart anzuordnen, dass mittels einer Datenmigration Zugriffsparameter optimiert werden. Hierzu kennt der Fachmann, dass er Datensätze replizieren kann und redundant abspeichern kann. Werden Datensätze besonders häufig angefragt, so ist es möglich, die Datensätze redundant vorzuhalten, so dass mehrere Netzwerkknoten die Anfragelast bewältigen.

Ein Nachteil im Stand der Technik ist es, dass bekannte Verfahren zuerst Zugriffsparameter auslesen und sodann eine Lastenverteilung in dem Computernetzwerk durchführen. Somit ist bereits das ungewollte Szenario eingetroffen, dass die Zugriffsparameter nachteilig sind und hierauf wird im Nachhinein reagiert. Es fehlt also an effizienten Verfahren Zugriffsparameter vorauszusagen und proaktiv vorab bereits eine Lastenverteilung derart durchzuführen, dass negative Zugriffsparameter gar nicht erst entstehen.

Ein Nachteil im Stand der Technik ist es, dass nicht alle Anwendungsszenarien bei einer Verteilung von Datensätzen in einem Computernetzwerk berücksichtigt werden können. Typischerweise werden generische Ansätze geschaffen, wobei ein Bedarf darin besteht eine alternative Möglichkeit zu schaffen, Daten in einem Speichernetzwerk zu verteilen.

Generell besteht ein Bedarf ausgehend von dem Stand der Technik Verfahren zu schaffen, die eine Lastenverteilung bewirken und zudem mit herkömmlichen Verfahren kombinierbar sind. Darüber hinaus sollen entsprechende Verfahren einfach durchführbar sein, also einen geringen technischen Aufwand implizieren.

Demgemäß ist es eine Aufgabe der vorliegenden Erfindung ein Verfahren vorzuschlagen, welches es ermöglicht, Zugriffsparameter auf Netzwerkressourcen zu optimieren beziehungsweise eine möglichst vorteilhafte Verteilung von Datensätzen in einem Speichernetzwerk zu schaffen. Ferner ist es die Aufgabe der vorliegenden Erfindung eine entsprechend eingerichtete Systemanordnung vorzuschlagen, sowie ein Computerprogrammprodukt mit Steuerbefehlen, welche das Verfahren durchführen beziehungsweise ein computerlesbares Speichermedium, welches diese Steuerbefehle abspeichert.

Die Aufgabe wird gelöst durch ein Verfahren mit den Merkmalen gemäß Patentanspruch 1. Weitere vorteilhafte Ausgestaltungen sind in den Unteransprüchen angegeben.

Demgemäß wird ein Verfahren zur Geolokation von Datensätzen anhand von Zugriffsparametern in einem Netzwerk vorgeschlagen, aufweisend ein Unterteilen eines Datenidentifikators eines Datensatzes gemäß einer abgespeicherten Datenidentifikatorbeschreibung zur Erzeugung von Teilzeichenketten des Datenidentifikators, wobei jedem Datensatz ein eindeutiger Datenidentifikator zugewiesen ist; ein iteratives Ausführen des Unterteilens, derart, dass für jeden Datenidentifikator jedes Datensatzes mindestens eine Teilzeichenkette berechnet wird; ein Auslesen von Zugriffsparametern auf die jeweiligen Datensätze, derart, dass eine Verteilung der Geolokation der Zugreifer bezüglich der Teilzeichenketten identifiziert wird, zum Bestimmen der geographischen Herkunft der Zugreifer je Teilzeichenkette; und ein Migrieren der Datenhaltung mehrerer Datensätze mit jeweils gleicher Teilzeichenkette in deren Datenidentifikatoren, derart, dass eine geographische Distanz von Netzwerkkomponenten, welche die Datensätze abspeichern, zur Geolokation der Zugreifer verringert wird.

Bei einer Geolokation handelt es sich generell um das Verteilen von Datensätzen auf Netzwerkknoten in einer gewissen geographischen Position. Die Geolokation von Daten ist also diejenige geographische Position, an der die Datensätze abgespeichert werden. So weist das Internet mehrere Netzwerkknoten auf, welche mit unterschiedlichen Netzwerkressourcen ausgestattet sind. Beispielsweise kann ein Rechenzentrum in Frankfurt betrieben werden und sodann wird die Geolokation der abgespeicherten Daten eben mit Frankfurt bezeichnet. Generell ist es besonders vorteilhaft, wenn Daten in geographischer Nähe zu dem anfragenden Benutzer abgespeichert werden. Dies verringert die Last in dem Computernetzwerk insgesamt, da typischerweise Daten von Netzwerkknoten zu Netzwerkknoten an den Benutzer übermittelt werden. Eine Verringerung der geographischen Distanz bedeutet also typischerweise auch eine Verringerung der zwischengeschalteten Netzwerkressourcen beziehungsweise Netzwerkknoten. Somit bedeutet die Verringerung der geographischen Distanz von Datenquelle und Datensenke eine geringere Last in dem Computernetzwerk und auch der anfragende Benutzer profitiert von besseren Zugriffsparametern. Typischerweise steigert eine geringere Distanz die zu verwendenden Netzwerkressourcen und erhöht die Zuverlässigkeit der Datenbereitstellung. Darüber hinaus werden Latenzzeiten gesenkt und die Bandbreite erhöht.

Allgemein beziehen sich Zugriffsparameter auf die Datenabfragen, welche unter anderem Latenzzeiten, Bandbreiten und Verfügbarkeiten beschreiben. Darüber hinaus können auch Benutzerinformationen als Zugriffsparameter bezeichnet werden. Eine Internetadresse eines anfragenden Benutzers kann ebenfalls als Zugriffsparameter beschrieben werden. Generell können alle Parameter, welche bezüglich einer Datenanfrage ausgelesen werden können als Zugriffsparameter bezeichnet werden. Dies lässt Rückschlüsse auf den anfragenden Benutzer zu und beispielsweise kann anhand einer Netzwerkadresse auf die geographische Position des anfragenden Benutzers geschlossen werden.

Bei Datensätzen handelt es sich ganz allgemein um Daten, welche logisch oder technisch zusammengefasst werden. Das vorgeschlagene Verfahren lässt sich auf alle möglichen Daten beziehungsweise Datensätze anwenden.

Ein Unterteilen eines Datenidentifikator eines Datensatzes erfolgt derart, dass die Datenidentifikatorbeschreibung ausgelesen wird und sodann werden einzelne Bruchteile des Datenidentifikators identifiziert und im Folgenden gesondert behandelt. Ein Datenidentifikator kann beispielsweise ein Link sein, oder aber auch eine Bezeichnung eines Datensatzes. So ist es möglich, dass ein Datensatz eine Kostenrechnung beschreibt und der Datenidentifikator ist die Rechnungsnummer. So kann die Datenidentifikatorbeschreibung anzeigen, dass der Datenidentifikator vierstellig aus dem Jahr besteht, zweistellig aus dem Monat und vierstellig aus der Rechnungsnummer. So lassen sich also die einzelnen Teilzeichenketten bilden, die aufzeigen, dass die erste Teilzeichenkette vierstellig ist und aus Ziffern von 0-9 besteht, die zweite Teilzeichenkette ist der zweistellige Monat, wobei die erste Stelle einen Wertebereich null bzw. eins hat und die zweite Stelle einen Wertebereich von 0-2. Somit kann der Wertebereich dieser Teilzeichenkette als 12 identifiziert werden. Die dritte Teilzeichenkette ist die Rechnungsnummer, welche vierstellig ist und somit viermal aus einer Ziffer von 0-9 besteht. Hier lässt sich einfach errechnen, dass der Wertebereich dieser Teilzeichenkette zehn hoch vier ist, also 10.000. Jede Rechnung hat einen eindeutigen Datenidentifikator derart, dass also jede Rechnung, beziehungsweise allgemein gesprochen jeder Datensatz, eindeutig mittels des Datenidentifikators identifizierbar ist.

Beispiele für einen Datenidentifikator sind beispielsweise eine IP-Adresse, generell eine Netzwerkadresse, eine Rechnungsnummer oder ein Dateiname. Die Datenidentifikatorbeschreibung beschreibt hierbei, wie Teilzeichenketten aus dem Datenidentifikator gebildet werden können. Im einfachsten Fall ist dies ein Punkt, der die Teilzeichenketten voneinander abgegrenzt bzw. eine semantische Bedeutung, wie bei einem Datum das Jahr und der Monat.

Damit alle Datenidentifikatoren in Teilzeichenketten zerlegt werden können, erfolgt ein iteratives Ausführen des Unterteilens, derart dass für jeden Datenidentifikator jedes Datensatzes mindestens eine Teilzeichenkette berechnet wird. Am Ende dieses Verfahrensschrittes sind also alle Datenidentifikatoren analysiert und typischerweise in eine gleiche Anzahl von Teilzeichenketten zerlegt. Der Verfahrensschritt kann derart implementiert werden, dass ein Verzeichnis beziehungsweise eine Datenbank ausgelesen wird und somit werden alle Datensätze bezüglich ihrer Datenidentifikatoren behandelt. Liegen beispielsweise die Datenidentifikatoren als ein Netzwerkpfad vor, so kann es möglich sein, dass bei einer IP-Adresse von 192.168.1.2 vier Teilzeichenketten gebildet werden, welche als erste Teilzeichenkette 192, als zweite Teilzeichenkette 168, als dritte Teilzeichenkette 1 und als vierte Teilzeichenkette 2 umfasst. IP-Adressen werden typischerweise durch einen Punkt separiert, derart, dass klar erkennbar ist, dass vier Teilzeichenketten zu bilden sind. Andere Versionen des Internetprotokolls sehen hier mehrere Bereiche vor und dementsprechend werden auch mehrere Teilzeichenketten gebildet.

Es erfolgt ein Auslesen von Zugriffsparametern auf die jeweiligen Datensätze, derart dass eine Verteilung der Geolokation der Zugreifer bezüglich der Teilzeichenketten identifiziert wird. Die angebotenen Daten werden also von einer Mehrzahl von Zugreifern beziehungsweise anfragenden Benutzern abgerufen. Anhand der ausgelesenen Zugriffsparameter kann erkannt werden, wo sich der Zugreifer geographisch befindet. Bestimmte Regionen weisen bestimmte Internetadressen auf und somit kann anhand dieser Parameter die Geolokation des Zugreifers bestimmt werden. Darüber hinaus kann der Zugreifer ein mobiles Endgerät verwenden, dass beispielsweise eine Mobilfunknummer mit einem Ländercode aufweist. Hierbei sind auch weitere Ortungsmöglichkeiten geeignet, wie beispielsweise eine Satellitenortung. Darüber hinaus ist eine Ortung mittels eines Ausmessens von Latenzzeiten zu Mobilfunkmasten möglich.

Die Zugriffsparameter werden derart ausgelesen, dass bestimmt werden kann, welche Zugreifer auf weiche Teilzeichenketten zugreifen. So ist es beispielsweise möglich, dass ein Datenidentifikator mittels der Datenidentifikatorbeschreibung JJJJNNNN erzeugt wird. Hierbei kann es sich um eine Rechnung handeln, welche in einer ersten Teilzeichenkette vierstellig das Jahr bezeichnet und in einer zweiten Teilzeichenkette eine fortlaufende Rechnungsnummer beschreibt. In diesem Zusammenhang kann es vorteilhaft sein zu erkennen, dass beispielsweise deutsche Zugreifer vermehrt auf Rechnungen aus dem Jahre 2022 zugreifen. Somit wird also die Teilzeichenkette JJJJ ausgewertet und es erfolgt eine Interpretation derart, dass ein Ländercode einer bestimmten Belegung der Jahreszahl zugeordnet wird. Es wird also erkannt, dass das Länderkürzel DE besonders stark mit 2022 korreliert ist.

Generell verteilen sich die Zugreifer typischerweise geographisch über die ganze Welt, wobei jedoch anhand von vorbestimmten Schwellwerten beziehungsweise einer relativen Häufigkeit festgestellt werden kann, dass auf bestimmte Datensätze, welche durch bestimmte Teilzeichenketten beschrieben werden, einzelne Regionen besonders stark zugreifen. Somit ist es also möglich die Datenhaltung derart auszugestalten, dass die angefragten Datensätze mit der beschreibenden Teilzeichenkette 2022 näher an die anfragende Einheit verschoben wird.

Bei einem Zugreifer handelt es sich generell um ein technisches Gerät beziehungsweise eine Mehrzahl von technischen Geräten. Ein Zugreifer kann auch allgemein als ein anfragender Benutzer bezeichnet werden oder eine Datensenke. Der Zugreifer ist also derjenige, der die Datensätze bei einem Netzwerkknoten anfordert und sodann übermittelt bekommt.

Auch kann durch das Auslesen von Zugriffsparametern ermittelt werden, ob eine Zuverlässigkeit beziehungsweise eine Sicherheit der Datenbereitstellung nicht gewährleistet ist. Stellt beispielsweise eine gewisse Anzahl an Zugreifern eine Zugriffsanfrage, welche aufgrund eines Ausfalls in einem Netzwerkknoten nicht erfüllt werden kann, so kann dies ebenfalls anhand der Zugriffsparameter identifiziert werden und die Datenhaltung kann in Richtung der Zugreifer migriert werden, derart, dass die angefragten Datensätze repliziert werden und näher an den Zugreifern abgespeichert werden.

Generell ist es bekannt, wo Datensätze abgespeichert werden, da dies von den einzelnen Netzwerkknoten erfolgt. Diesen ist die eigene Position bekannt und nunmehr ist also auch die Geolokation der Zugreifer bekannt. Dementsprechend kann ein Migrieren der Datenhaltung mehrerer Datensätze mit jeweils gleicher Teilzeichenkette in deren Datenidentifikatoren erfolgen. In dem vorgetragenen Beispiel werden also alle Datensätze, die eine Teilzeichenkette in ihrem Datenidentifikator aufweisen welche das Jahr 2022 beschreibt entsprechend migriert. Folglich werden in dem vorgetragenen Beispiel alle Datensätze, welche Rechnungen beschreiben näher zu dem Zugreifer abgespeichert und somit wird die Datenhaltung dahingehend verändert, dass die Rechnungsdatensätze näher an Zugreifer migriert werden, die das Länderkürzel DE aufweisen. Hierbei ist es nicht notwendig, dass die geographische Distanz minimal ist, da weitere Zugriffsparameter in die Auswahl der abzuspeichernden Netzwerkkomponenten einfließen können. Generell wird also die geographische Distanz verringert, wobei auch die verfügbaren Netzwerkkomponenten bezüglich der Zugriffsparameter evaluiert werden können und sodann priorisiert werden können.

Werden beispielsweise zwei Netzwerkkomponenten identifiziert, die eine geringere geographische Distanz zu den Zugreifern haben als die derzeit abspeichernde Netzwerkkomponente, so wird von diesen beiden Netzwerkkomponenten diejenige ausgewählt, die besonders vorteilhafte Zugriffsparameter aufweist. Generell ist dem Fachmann bekannt, was vorteilhafte Zugriffsparameter sind. Dies ist beispielsweise eine geringere Latenzzeit, eine höhere Bandbreite oder eine höhere Verfügbarkeit.

Auf diese Weise wird also nicht nur die geographische Distanz verringert, sondern es kann eine Gewichtung beziehungsweise eine Priorisierung der Netzwerkkomponenten anhand von ausgelesenen Zugriffsparametern erfolgen. Das vorgeschlagene Verfahren kann dynamisch zur Laufzeit derart erfolgen, dass die Datenhaltung dynamisch verändert wird und sich vorhandenen Zugriffsanfragen anpasst.

Generell ist es vorteilhaft, dass erfindungsgemäß bereits Rückschlüsse auf eine zukünftige Datenanfrage gezogen werden können. Wird beispielsweise eine bestimmte Teilzeichenkette beziehungsweise deren Datensatz besonders häufig angefragt, so wird erfindungsgemäß darauf geschlossen, dass weitere Datensätze mit der gleichen Teilzeichenkette zukünftig vermehrt angefragt werden und entsprechend kann die Datenhaltung vorteilhaft ausgestaltet werden.

In dem vorliegenden Beispiel greifen deutsche Benutzer besonders oft auf eine Rechnung mit der Teilzeichenkette 2022 zu. Besteht nunmehr die Rechnungsnummer aus zwei Teilzeichenketten, nämlich dem vierstelligen Jahr und der vierstelligen Rechnungsnummer so werden alle Rechnungen mit dem Jahr 2022 weiter zu den Zugreifern migriert. Liegen also beispielsweise fünf Rechnungen vor, die alle das Jahr 2022 aufweisen und es wurde erkannt, dass vier dieser Rechnungen aus Deutschland zugegriffen wurden, so ist es erfindungsgemäß besonders vorteilhaft, dass auch die fünfte Rechnung vorteilhaft migriert werden kann, auch wenn diese noch nicht angefragt wurde. Aus der Tatsache, dass vier dieser Rechnungen bereits angefragt wurden kann proaktiv geschlossen werden, dass die fünfte auch angefragt wird und sodann kann auch dieser Datensatz näher an dem Zugreifer abgespeichert werden, auch wenn dieser diese fünfte Rechnung noch gar nicht abgefragt hat.

Somit stellt sich also der technische Vorteil ein, dass die Datenhaltung proaktiv auch für Datensätze durchgeführt werden kann, welche noch gar nicht angefragt wurden. Somit wird der Nachteil im Stand der Technik überwunden, dass lediglich aktuelle Zugriffsparameter ausgelesen werden und sodann im Nachhinein reagiert wird. Das vorgeschlagene Verfahren kann also proaktiv im Vorhinein die Datenhaltung derart optimieren, dass nachteilige Zugriffsparameter gar nicht erst entstehen.

Ein Migrieren der Datenhaltung bedeutet nicht zwingendermaßen, dass die Daten lediglich in Richtung der Zugreifer verschoben werden, sondern es ist auch möglich, dass eine Analyse der Zugriffsverteilung ergibt, dass mehrere Regionen auf Datensätze mit bestimmten Teilzeichenketten zugreifen und insofern kann auch eine redundante Datenhaltung derart erfolgen, dass die Datensätze in Richtung der Zugreifer kopiert werden. Hierzu kann die Zugriffsverteilung evaluiert werden und Spitzen bei der geographischen Zugriffsverteilung können identifiziert werden. Gibt es einen Aufschlag der Datenzugriffe beispielsweise aus Deutschland und einem weiteren Land, so können die Daten derart redundant gehalten werden, dass die geographische Nähe zu Deutschland bezüglich eines ersten abspeichernden Netzwerkknotens reduziert wird und sodann werden die Daten repliziert auf einem weiteren Server beziehungsweise Netzwerkknoten gespeichert, der geographisch näher an diesem zweiten Land gelegen ist. Die Verteilungsanalyse kann mittels statistischer Verfahren erfolgen und es kann beispielsweise bestimmt werden, dass die Datenhaltung dann geändert wird, wenn gewisse Schwellwerte überschritten werden.

Gemäß einem Aspekt der vorliegenden Erfindung werden verfügbare Netzwerkkomponenten bezüglich der ausgelesenen Zugriffsparameter bei dem Migrieren priorisiert. Dies hat den Vorteil, dass bei der Verringerung der geographischen Distanz diejenigen Netzwerkkomponenten bevorzugt werden, die vorteilhafte Zugriffsparameter fort weisen können. Beispielsweise werden Netzwerkkomponenten bei dem Migrieren bevorzugt, die eine geringe Latenzzeit, eine hohe Bandbreite und/ oder eine hohe Verfügbarkeit aufweisen.

Gemäß einem weiteren Aspekt der vorliegenden Erfindung werden die ausgelesenen Zugriffsparameter zeitlich extrapoliert und das Migrieren wird proaktiv für zukünftige Zugriffsanfragen ausgeführt. Dies hat den Vorteil, dass anhand von bereits gemessenen Zugriffsparametern eine zukünftige Belegung der Zugriffsparameter geschätzt werden kann und sodann können diejenigen Netzwerkkomponenten priorisiert werden, die auch für zukünftige Zugriffsanfragen vorteilhafte Zugriffsparameter aufweisen. So kann eine zeitliche Verteilung der Zugriffsparameter gemessen werden und sodann kann mittels Extrapolierens festgestellt werden, wie sich die Zugriffsparameter in der Zukunft entwickeln. Somit können die Datensätze bereits migriert werden, bevor diese überhaupt vermehrt angefragt wurden.

Gemäß einem weiteren Aspekt der vorliegenden Erfindung wird ein relativer oder absoluter Schwellwert bereitgestellt, der angibt, ab welcher Zugriffsanzahl ein Datensatz migriert wird. Dies hat den Vorteil, dass anhand der Zugriffsverteilung identifiziert werden kann, wann Datensätze in dem Netzwerk umverteilt beziehungsweise verteilt werden müssen. So kann festgelegt werden, dass ab einem gewissen Anstieg der Zugriffsparameter die Datensätze migriert werden müssen. Auch kann ein absoluter numerischer Wert angegeben werden, der anzeigt, dass ab diesem Zugriffswert die Datensätze migriert werden müssen. Beispielsweise können dann die Datensätze repliziert werden und derart redundant abgespeichert werden, dass sich wiederum vorteilhafte Zugriffsparameter einstellen.

Gemäß einem weiteren Aspekt der vorliegenden Erfindung wird ein relativer oder absoluter Schwellwert bereitgestellt, der angibt, ab welchen gemessenen Zugriffsparametern ein Datensatz migriert wird. Dies hat den Vorteil, dass nicht nur anhand der Zugriffsanzahl, sondern auch anhand von gemessenen Zugriffsparametern ein Datensatz migriert werden kann. Hierbei können wiederum Untergrenzen für Latenzzeiten, Bandbreiten und Verfügbarkeiten angegeben werden.

Gemäß einem weiteren Aspekt der vorliegenden Erfindung stellt die Datenidentifikatorbeschreibung einen Hinweis auf ein Format, eine Semantik, eine funktionelle Einheit, einen Inhalt, einen Zeichensatz, eine Nummer, eine alphanumerische Zeichenkette, eine Kardinalität und/ oder einen Datenidentifikatoraufbau bereit. Dies hat den Vorteil, dass anhand dieser Beschreibung Teilzeichenketten geschaffen werden können und somit kann erfindungsgemäß das Unterteilen eines Datenidentifikators in Teilzeichenketten erfolgen.

Gemäß einem weiteren Aspekt der vorliegenden Erfindung stellen die Zugriffsparameter einen Hinweis auf die Geolokation der Zugreifer bereit. Dies hat den Vorteil, dass anhand des Zugriffs ausgelesen werden kann, wo sich die anfragenden Benutzer geographisch befinden. Ein Zugriffsparameter kann beispielsweise eine Internetprotokolladresse sein oder aber auch eine Mobilfunknummer. Hierbei können jegliche Parameter verwendet werden, die einen Hinweis auf die Geolokation der Datensenke bereitstellen.

Gemäß einem weiteren Aspekt der vorliegenden Erfindung wird die Geolokation der Zugreifer anhand einer IP-Adresse, einer Registrierungsinformation, einer Netzwerkparameterfunktion, einer geographischen Information, einer Information einer Netzwerkkomponente und/ oder einer von dem Zugreifer bereitgestellten Information ermittelt. Dies hat den Vorteil, dass die geographische Position der Zugreifer entweder automatisch ermittelt wird oder aber die Zugreifer registrieren sich bei einem Datendienst und hinterlegen ihren Standort.

Gemäß einem weiteren Aspekt der vorliegenden Erfindung stellt mindestens eine Teilzeichenkette einen Hinweis auf einen geographischen Speicherort des Datensatzes bereit. Dies hat den Vorteil, dass anhand der Teilzeichenkette ausgelesen werden kann, wo sich der Speicherort des Datensatzes befindet. Dies kann beispielsweise eine Internetprotokolladresse sein, die einer bestimmten geographischen Region zugeordnet ist.

Gemäß einem weiteren Aspekt der vorliegenden Erfindung umfasst ein Migrieren ein Abspeichern, ein redundantes Abspeichern, ein Löschen abgespeicherter Datensätze, ein Verteilen von Datensätzen auf Netzwerkkomponenten und/ oder ein Verschieben von Datensätzen. Dies hat den Vorteil, dass Daten nicht nur verschoben werden können, also kopiert und gelöscht werden können, sondern eben auch derart redundant abgespeichert, dass eine Mehrzahl von Benutzergruppen vorteilhafte Zugriffsparameter vorfinden. So ist es möglich, dass die Zugriffsverteilung derart geclustert wird, dass mehrere Gruppen von Zugreifern identifiziert werden. Diese Gruppen haben sodann eine geographische Herkunft und die Daten können in dem Netz derart redundant abgespeichert werden, dass alle diese Zugriffsgruppen vorteilhafte Netzwerkparameter vorfinden, die aufgrund der verringerten Distanz zum Speicherort entstehen.

Gemäß einem weiteren Aspekt der vorliegenden Erfindung werden in einem vorbereitenden Verfahrensschritt bestehende Daten in Datensätze unterteilt. Dies hat den Vorteil, dass Partitionen von Daten geschaffen werden können und somit müssen nicht gesamte bestehende Datenbestände migriert werden, sondern vielmehr können diese feingranular unterteilt werden und dann vorteilhaft im Netz verteilt werden. Gemäß einem weiteren Aspekt der vorliegenden Erfindung wird eine Geolokation der Netzwerkkomponenten anhand einer bereitgestellten Information, Anerkennung und/ oder anhand von Latenzzeiten ermittelt. Dies hat den Vorteil, dass entweder die Netzwerkknoten selbst angeben, wo ihre geographische Position ist oder aber auch ein Ermitteln der geographischen Position derart erfolgen kann, dass beispielsweise Laufzeitparameter ausgemessen werden können und sodann ein Rückschluss auf die geographische Position der abgespeicherten Daten gezogen werden kann.

Die Aufgabe wird auch gelöst durch eine Systemanordnung zur Geolokation von Datensätzen anhand von Zugriffsparametern in einem Netzwerk, aufweisend eine Segmentierungseinheit eingerichtet zum Unterteilen eines Datenidentifikators eines Datensatzes gemäß einer abgespeicherten Datenidentifikatorbeschreibung zur Erzeugung von Teilzeichenketten des Datenidentifikators, wobei jedem Datensatz ein eindeutiger Datenidentifikator zugewiesen ist; eine Schleifeneinheit eingerichtet zum iterativen Ausführen des Unterteilens, derart, dass für jeden Datenidentifikator jedes Datensatzes mindestens eine Teilzeichenkette berechnet wird; eine Ausleseeinheit eingerichtet zum Auslesen von Zugriffsparametern auf die jeweiligen Datensätze, derart, dass eine Verteilung der Geolokation der Zugreifer bezüglich der Teilzeichenketten identifiziert wird, zum Bestimmen der geographischen Herkunft der Zugreifer je Teilzeichenkette; und eine Migrationseinheit eingerichtet zum Migrieren der Datenhaltung mehrerer Datensätze mit jeweils gleicher Teilzeichenkette in deren Datenidentifikatoren, derart, dass eine geographische Distanz von Netzwerkkomponenten, welche die Datensätze abspeichern, zur Geolokation der Zugreifer verringert wird.

Die Aufgabe wird auch gelöst durch ein Computerprogrammprodukt mit Steuerbefehlen, welche das vorgeschlagene Verfahren implementieren beziehungsweise die vorgeschlagene Vorrichtung betreiben.

Erfindungsgemäß ist es besonders vorteilhaft, dass das Verfahren zum Betreiben der vorgeschlagenen Vorrichtungen und Einheiten verwendet werden kann. Ferner eignen sich die vorgeschlagenen Vorrichtungen und Einrichtungen zur Ausführung des erfindungsgemäßen Verfahrens. Somit implementiert jeweils die Vorrichtung strukturelle Merkmale, welche geeignet sind, das entsprechende Verfahren auszuführen. Die strukturellen Merkmale können jedoch auch als Verfahrensschritte ausgestaltet werden. Auch hält das vorgeschlagene Verfahren Schritte zu Umsetzung der Funktion der strukturellen Merkmale bereit. Darüber hinaus können physische Komponenten gleicherweise auch virtuell beziehungsweise virtualisiert bereitgestellt werden.

Weitere Vorteile, Merkmale und Einzelheiten der Erfindung ergeben sich aus der nachfolgenden Beschreibung, in der unter Bezugnahme auf die Zeichnungen Aspekte der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausgeführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung beziehungsweise normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren. In den Figuren zeigen:
- Figur 1:: ein schematisches Ablaufdiagramm des vorgeschlagenen Verfahrens gemäß einem Aspekt der vorliegenden Erfindung; und
- Figur 2:: ein Migrieren der Datenhaltung von mehreren Datensätzen mit jeweils gleicher Teilzeichenkette gemäß einem weiteren Aspekt der vorliegenden Erfindung.

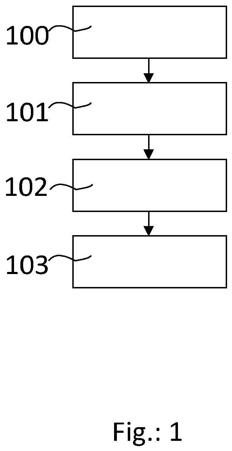

Figur 1 zeigt ein schematisches Ablaufdiagram mit einem Verfahren zur Geolokation von Datensätzen anhand von Zugriffsparametern in einem Netzwerk, aufweisend ein Unterteilen 100 eines Datenidentifikators eines Datensatzes gemäß einer abgespeicherten Datenidentifikatorbeschreibung zur Erzeugung von Teilzeichenketten des Datenidentifikators, wobei jedem Datensatz ein eindeutiger Datenidentifikator zugewiesen ist; ein iteratives Ausführen 101 des Unterteilens 100, derart, dass für jeden Datenidentifikator jedes Datensatzes mindestens eine Teilzeichenkette berechnet wird; ein Auslesen 102 von Zugriffsparametern auf die jeweiligen Datensätze, derart, dass eine Verteilung der Geolokation der Zugreifer bezüglich der Teilzeichenketten identifiziert wird, zum Bestimmen der geographischen Herkunft der Zugreifer je Teilzeichenkette; und ein Migrieren 103 der Datenhaltung mehrerer Datensätze mit jeweils gleicher Teilzeichenkette in deren Datenidentifikatoren, derart, dass eine geographische Distanz von Netzwerkkomponenten, welche die Datensätze abspeichern, zur Geolokation der Zugreifer verringert wird.

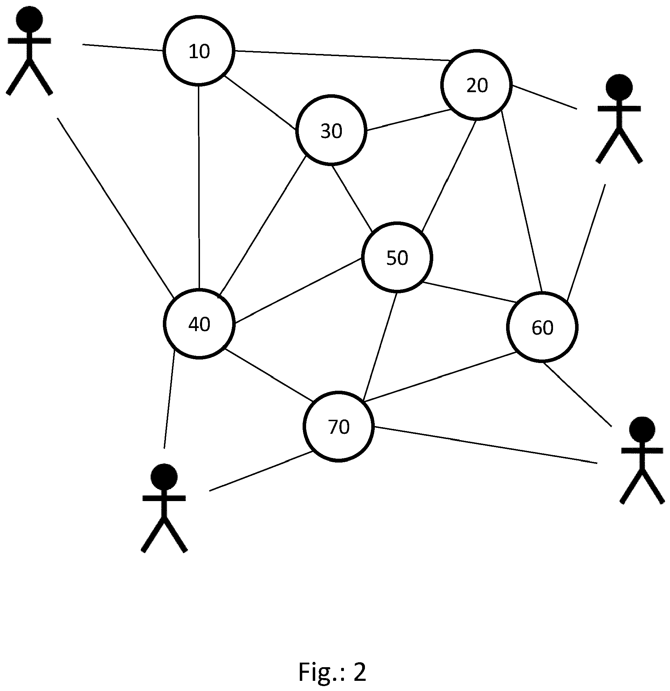

Figur 2 zeigt in einem schematischen Übersichtsdiagramm ein Migrieren der Datenhaltung gemäß einem Aspekt der vorliegenden Erfindung. In der vorliegenden Figur 2 sind vier Akteure eingezeichnet, die jeweils Daten anfragen. In dem vorliegenden Beispiel werden Datensätze in dem Computernetzwerk angeboten, welche Filmmaterial beschreiben. So ist es möglich, dass in dem Computernetzwerk Serientitel angeboten werden, die einen Datenidentifikator zugewiesen bekommen haben. Der Datenidentifikator beschreibt, dass eine bestimmte Filmserie gemäß einer bestimmten Staffel angeboten wird. So kann die Datenidentifikator Beschreibung spezifizieren, dass der Serienname fünfstellig alphanumerisch kodiert wird und darauf folgt eine zweistellige Ziffer die die Staffel beschreibt. Anhand dieser Formatbeschreibung kann der Datenidentifikator derart zerlegt werden, dass eine Teilzeichenkette entsteht, die fünfstellig einen Hinweis auf die Serie gibt und eine weitere Teilzeichenkette erstellt werden kann, die zweistellig einen Hinweis auf die Staffel gibt.

Nunmehr wird in dem Netzwerk erkannt, dass der Benutzer links oben besonders häufig auf eine bestimmte Serie zugreift. Bei dem Benutzer kann es sich um einen einzelnen Benutzer handeln oder aber auch um eine Gruppe von Benutzern. Derzeit wird die entsprechende Serie auf dem Netzwerkknoten 50 abgespeichert. Dies involviert, dass Daten an den Akteur links oben über die Netzwerkknoten 50 30 10 und 50 40 gesendet werden. Hierbei wird erkannt, dass dies geographisch optimiert werden kann, um Netzwerkressourcen zu schonen. Beispielsweise wird erkannt, dass die Netzwerkknoten 10 und 30 näher an dem Benutzer beziehungsweise an der Benutzergruppe liegen. Somit steht in Auswahl, ob nunmehr die Datensätze auf dem Netzwerkknoten 10 oder 30 gespeichert werden. Erfindungsgemäß ist beides möglich, da in jedem Fall die geographische Distanz zwischen Datenquelle und Datensenke verkürzt wird.

Nunmehr wird jedoch gemessen, dass die Datenquelle 30 bessere Zugriffsparameter aufweist als die Datenquelle 10. Beispielsweise verfügt die Datenquelle 30 über erheblich mehr Speicherplatz und Rechenkapazität. Dies spiegelt sich alles in den Zugriffsparametern wieder. Somit wird also zur Verringerung der geographischen Distanz ein Migrieren nicht auf dem Netzwerkknoten 10 durchgeführt, sondern auf dem Netzwerkknoten 30. Generell ist es auch möglich die Datensätze zu Partitionieren und sodann einen Teil auf die Netzwerkkomponente 10 auszulagern und einen anderen Teil auf die Netzwerkkomponente 30.

Wird nunmehr erkannt, dass der Benutzer rechts unten ebenfalls auf die gleiche Serie zugreifen will, werden die Daten außerdem redundant abgespeichert, nämlich auf dem Netzwerkknoten 60. Somit erfolgt also ein Migrieren der Daten von Netzwerkknoten 50 auf die Netzwerkknoten 30 und/ oder 10 sowie redundant auf den Netzwerkknoten 60. Somit wird die Geolokation verändert und es ergeben sich geeignete Zugriffsparameter, welche besonders vorteilhaft gegenüber den Zugriffsparametern des Knotens 50 sind.

Besonders vorteilhaft ist es hierbei, dass das Migrieren anhand der Teilzeichenkette erfolgt. Somit wird also nicht lediglich auf den Datenidentifikator insgesamt abgestellt, sondern vielmehr wird erkannt, dass eine bestimmte Serie bei den Benutzern links oben und rechts unten angefragt wird. Somit muss also nur die Teilzeichenkette berücksichtigt werden, die den Serientitel codiert. Aufgrund der gesteigerten Zugriffswerte auf diesen Serientitel kann gefolgert werden, dass die gesamte Staffel für die jeweiligen Benutzer interessant ist und somit kann proaktiv ein Migrieren der Daten erfolgen, bevor überhaupt die restlichen Staffeln zugegriffen werden. Wird also eine gewisse Anzahl an Staffeln bereits heruntergeladen, so wird extrapoliert und identifiziert, dass in Zukunft die weiteren Staffeln heruntergeladen werden. Somit kann die Datenhaltung bereits in dem Speichernetzwerk optimiert werden bevor die tatsächlichen Datenanfragen durchgeführt werden.

Dies ist deshalb gegenüber dem Stand der Technik besonders vorteilhaft, da dieser nur auf sich bereits eingestellte negative Zugriffsparameter konzentriert und das vorgeschlagene Verfahren bereits proaktiv eine besonders vorteilhafte Datenverteilung in dem Netzwerk erreichen kann.

## Patentansprüche

1. Verfahren zur Geolokation von Datensätzen anhand von Zugriffsparametern in einem Netzwerk, aufweisend:
- ein Unterteilen (100) eines Datenidentifikators eines Datensatzes gemäß einer abgespeicherten Datenidentifikatorbeschreibung zur Erzeugung von Teilzeichenketten des Datenidentifikators, wobei jedem Datensatz ein eindeutiger Datenidentifikator zugewiesen ist;
- ein iteratives Ausführen (101) des Unterteilens (100), derart, dass für jeden Datenidentifikator jedes Datensatzes mindestens eine Teilzeichenkette berechnet wird;
- ein Auslesen (102) von Zugriffsparametern auf die jeweiligen Datensätze, derart, dass eine Verteilung der Geolokation der Zugreifer bezüglich der Teilzeichenketten identifiziert wird, zum Bestimmen der geographischen Herkunft der Zugreifer je Teilzeichenkette; und
- ein Migrieren (103) der Datenhaltung mehrerer Datensätze mit jeweils gleicher Teilzeichenkette in deren Datenidentifikatoren, derart, dass eine geographische Distanz von Netzwerkkomponenten, welche die Datensätze abspeichern, zur Geolokation der Zugreifer verringert wird.

2. Verfahren nach Anspruch 1, **dadurch gekennzeichnet, dass** verfügbare Netzwerkkomponenten anhand der ausgelesenen (102) Zugriffsparameter bezüglich des Migrierens (103) priorisiert werden.

3. Verfahren nach Anspruch 1 oder 2, **dadurch gekennzeichnet, dass** die ausgelesenen (102) Zugriffsparameter zeitlich extrapoliert werden und das Migrieren (103) proaktiv für zukünftige Zugriffsanfragen ausgeführt wird.

4. Verfahren nach einem der vorhergehenden Ansprüche, **dadurch gekennzeichnet, dass** ein relativer oder absoluter Schwellwert bereitgestellt wird, der angibt, ab welcher Zugriffsanzahl ein Datensatz migriert wird.

5. Verfahren nach einem der vorhergehenden Ansprüche, **dadurch gekennzeichnet, dass** ein relativer oder absoluter Schwellwert bereitgestellt wird, der angibt, ab welchen gemessenen Zugriffsparametern ein Datensatz migriert wird.

6. Verfahren nach einem der vorhergehenden Ansprüche, **dadurch gekennzeichnet, dass** die Datenidentifikatorbeschreibung einen Hinweis auf ein Format, eine Semantik, eine funktionale Einheit, einen Inhalt, einen Zeichensatz, eine Nummer, eine alphanummerische Zeichenkette, eine Kardinalität und/ oder einen Datenidentifikatoraufbau bereitstellt.

7. Verfahren nach einem der vorhergehenden Ansprüche, **dadurch gekennzeichnet, dass** die Zugriffsparameter einen Hinweis auf die Geolokation der Zugreifer bereitstellen.

8. Verfahren nach einem der vorhergehenden Ansprüche, **dadurch gekennzeichnet, dass** die Geolokation der Zugreifer anhand einer IP-Adresse, einer Registrierungsinformation, einer Netzwerkparameterfunktion, einer geographischen Information, einer Information einer Netzwerkkomponente und/ oder einer von dem Zugreifer bereitgestellten Information ermittelt wird.

9. Verfahren nach einem der vorhergehenden Ansprüche, **dadurch gekennzeichnet, dass** mindestens eine Teilzeichenkette einen Hinweis auf einen geographischen Speicherort des Datensatzes bereitstellt.

10. Verfahren nach einem der vorhergehenden Ansprüche, **dadurch gekennzeichnet, dass** ein Migrieren ein Abspeichern, ein redundantes Abspeichern, ein Löschen abgespeicherter Datensätze, ein Verteilen von Datensätzen auf Netzwerkkomponenten und/ oder ein Verschieben von Datensätzen umfasst.

11. Verfahren nach einem der vorhergehenden Ansprüche, **dadurch gekennzeichnet, dass** in einem vorbereitenden Verfahrensschritt bestehende Daten in Datensätze unterteilt werden.

12. Verfahren nach einem der vorhergehenden Ansprüche, **dadurch gekennzeichnet, dass** eine Geolokation der Netzwerkkomponenten anhand einer bereitgestellten Information, einer Kennung und/ oder anhand von Latenzzeiten ermittelt wird.

13. Systemanordnung zur Geolokation von Datensätzen anhand von Zugriffsparametern in einem Netzwerk, aufweisend:
- eine Segmentierungseinheit eingerichtet zum Unterteilen (100) eines Datenidentifikators eines Datensatzes gemäß einer abgespeicherten Datenidentifikatorbeschreibung zur Erzeugung von Teilzeichenketten des Datenidentifikators, wobei jedem Datensatz ein eindeutiger Datenidentifikator zugewiesen ist;
- eine Schleifeneinheit eingerichtet zum iterativen Ausführen (101) des Unterteilens (100), derart, dass für jeden Datenidentifikator jedes Datensatzes mindestens eine Teilzeichenkette berechnet wird;
- eine Ausleseeinheit eingerichtet zum Auslesen (102) von Zugriffsparametern auf die jeweiligen Datensätze, derart, dass eine Verteilung der Geolokation der Zugreifer bezüglich der Teilzeichenketten identifiziert wird, zum Bestimmen der geographischen Herkunft der Zugreifer je Teilzeichenkette; und
- eine Migrationseinheit eingerichtet zum Migrieren (103) der Datenhaltung mehrerer Datensätze mit jeweils gleicher Teilzeichenkette in deren Datenidentifikatoren, derart, dass eine geographische Distanz von Netzwerkkomponenten, welche die Datensätze abspeichern, zur Geolokation der Zugreifer verringert wird.

14. Computerprogrammprodukt, umfassend Befehle, die bei der Ausführung des Programms durch mindestens einen Computer diesen veranlassen, die Schritte des Verfahrens nach einem der Ansprüche 1 bis 12 auszuführen.

15. Computerlesbares Speichermedium, umfassend Befehle, die bei der Ausführung durch mindestens einen Computer diesen veranlassen, die Schritte des Verfahrens nach einem der Ansprüche 1 bis 12 auszuführen.
